# EUROPÄISCHE PATENTANMELDUNG

(11) **EP 3 483 676 A1**
(43) Veröffentlichungstag der Anmeldung: **15.05.2019**
(21) Anmeldenummer: 18203085.8
(22) Anmeldetag: 29.10.2018
(51) Int. Cl.: G05B 19/042

(54) **VERFAHREN ZUR STEUERUNG EINES HAUSHALTSGERÄTS UND HAUSHALTSGERÄT**

(30) Priorität: 14.11.2017 DE 102017220295
(71) Anmelder: BSH Hausgeräte GmbH, 81739 München (DE)
(72) Erfinder: Krautenbacher, Otto, 83349 Palling (DE)

(57) **Zusammenfassung**

Die Erfindung betrifft ein Verfahren zur Steuerung eines Haushaltsgeräts (20) bei der Ausführung eines Prozesses (35), wobei das Haushaltsgerät (35) mindestens einen Sensor (24) zur Erfassung von Prozessparametern (36) und mindestens einen Aktor (26) zum Verändern von Prozessparametern (36) aufweist.

Um eine Möglichkeit zu schaffen, vorhandene Prozesse zu verbessern oder neue Prozesse hinzuzufügen, wird vorgeschlagen, dass eine Serverstruktur (10) bereitgestellt wird, in welcher mindestens ein Prozessablauf (34) eines solchen Prozesses (35) gespeichert ist, und dass die Serverstruktur (10) mindestens einen solchen Aktor (26) des Haushaltsgeräts (20) ansteuert, um einen solchen Prozessablauf (34) durchzuführen.

## Beschreibung

Die Erfindung betrifft ein Verfahren zur Steuerung eines Haushaltsgeräts bei der Ausführung eines Prozesses, gemäß dem Oberbegriff des Anspruchs 1. Ferner betrifft die Erfindung ein solches Haushaltsgerät.

Solche Haushaltsgeräte sind Geräte, die üblicherweise zu Hause verwendet werden. Darunter zählen beispielsweise Herde, Mikrowellenherde, Spülmaschinen, Waschmaschinen, Trockner, Staubsauger oder ähnliches. Diese Haushaltsgeräte führen Prozesse durch, wenn die Haushaltsgeräte die vorgesehene Aufgabe erfüllen. Die Qualität der Ergebnisse wird dabei durch die Prozessführungen beeinflusst. Daher werden solche Prozesse ständig weiterentwickelt. Allerdings können die neuen Erkenntnisse, nicht auf bestehende Altgeräte oder nur umständlich über ein Firmware-Update übertragen werden.

Solche Prozesse können beispielsweise neue Rezepte, die in einem Backofen durchgeführt werden oder Programme einer Waschmaschine für unterschiedliche Textilienarten sein. Die Haushaltsgeräte weisen üblicherweise mindestens einen Sensor zur Erfassung von Prozessparametern und mindestens einen Aktuator zum Verändern von Prozessparametern auf. Solche Sensoren können beispielsweise bei einem Backofen einen Temperatursensor und/oder ein Feuchtigkeitssensor sein. Ein entsprechender Aktor wäre bei einem Backofen beispielsweise die Heizeinrichtung oder der Lüfter. Bei einer Waschmaschine kommen als Sensoren ebenfalls Temperatursensoren, Gewichtssensoren und/oder Verschmutzungssensoren in Frage. Als kommen Aktuatoren insbesondere Heizung, Wasserzufuhr, Waschmitteldosiereinrichtungen usw. in Frage. Bei üblichen Haushaltsgeräten sind die Steuerungseinrichtungen, mit welchen die Prozesse gesteuert werden, im Gerät integriert, so dass, wenn Prozesse optimiert werden sollen, die Steuerungseinrichtung auf den aktuellen Stand gebracht werden muss.

Dadurch erhalten in der Regel nur Neugeräte aktualisierte Prozesse. Darüber hinaus ist üblicherweise die Weitergabe von neuen Prozessen, die ein Hersteller entwickelt, nur auf eigene Geräte beschränkt. Ferner sind auch Prozesse von Drittanbietern, wie beispielsweise Herstellern von Verbrauchsmitteln üblicherweise nicht auf die Haushaltsgeräte bringbar.

Der vorliegenden Erfindung liegt die Aufgabe zugrunde, eine verbesserte oder zumindest andere Ausführungsform für ein Verfahren zu einer Steuerung eines Haushaltsgerätes bereitzustellen, die sich insbesondere durch eine Möglichkeit auszeichnet, vorhandene Prozesse zu verbessern oder neue Prozesse hinzuzufügen.

Diese Aufgabe wird erfindungsgemäß durch die Gegenstände der unabhängigen Ansprüche gelöst. Vorteilhafte Weiterbildungen sind Gegenstand der abhängigen Ansprüche.

Die Erfindung basiert auf der Grundidee, dass die Steuerung des Haushaltsgeräts über eine Serverstruktur erfolgt, in der Serverstruktur wird mindestens ein Prozessablauf eines solchen Prozesses gespeichert. Die Serverstruktur kann mindestens einen solchen Aktor des Haushaltsgerätes ansteuern, um so den Prozessablauf durchzuführen. Somit können der Serverstruktur neue Prozesse beigebracht werden, also neue Prozesse gespeichert werden, welche dann auf den unterschiedlichen Haushaltsgeräten ausgeführt werden können. Dadurch ist die Weiterentwicklung von Prozessen oder die neue Einführung von Prozessen für Haushaltsgeräte erheblich erleichtert, da auf den Haushaltsgeräten keine neue Software aufgespielt werden muss. Darüber hinaus ermöglicht die Auslagerung der Prozessführung auf die Serverstruktur, dass auch Geräte von Fremdherstellern gesteuert werden. Darüber hinaus können auch Drittanbieter Prozesse für Haushaltsgeräte anbieten und diese Prozesse bzw. den Prozessablauf in der Serverstruktur speichern, so dass die Serverstruktur diese Prozesse auf jedem Haushaltsgerät ausführen kann. Dies ist insbesondere interessant, wenn Verbrauchsmittelhersteller, also beispielsweise Hersteller für Spülmaschinenreinigungsmittel oder Waschmaschinenwaschmittel oder Entkalker oder ähnlichem spezielle Programme anbieten, mit welchen die Verbrauchsmittel optimal genutzt werden können.

In der Beschreibung und den beigefügten Ansprüchen wird unter einem Haushaltsgerät ein Gerät verstanden, das in einem üblichen Haushalt verwendet wird. Darunter zählen beispielsweise, aber nicht abschließend, Backöfen, Herde, Spülmaschinen, Waschmaschinen, Wäschetrockner, Staubsauger, Bügeleisen, Wasserkocher, Kaffeemaschinen, Staubsaugroboter und Haushaltsroboter im Allgemeinen.

In der Beschreibung und den beigefügten Ansprüchen wird unter einer Serverstruktur eine vorzugsweise zentrale Recheneinheit verstanden, welche insbesondere Daten speichern und Daten übertragen und Daten analysieren kann. Dadurch kann die Serverstruktur Daten von den Haushaltsgeräten empfangen und Steuerungsbefehle an die Haushaltsgeräte senden, um diese zu steuern.

In der Beschreibung und den beigefügten Ansprüchen wird unter einem Prozess ein Ablauf von verschieden Prozessschritten zur Erzielung einer bestimmten Wirkung mittels des Haushaltsgerätes verstanden.

In der Beschreibung und den beigefügten Ansprüchen werden unter Prozessparametern Parameter verstanden, welche den Prozess definieren. Dazu zählen beispielsweise Temperatur, Luftfeuchtigkeit, Wassermenge, Gewicht, Verschmutzungsgrad oder ähnliches.

In der Beschreibung und den beigefügten Ansprüchen wird unter einem Prozessablauf der genaue Verlauf der Prozessparameter insbesondere die zeitliche Abhängigkeit der Prozessparameter verstanden.

Eine günstige Möglichkeit sieht vor, dass das Haushaltsgerät der Serverstruktur mitteilt, welcher Prozess ablaufen soll. Die Serverstruktur steuert die notwendigen Aktoren des Haushaltsgerätes an, um den gewünschten Prozess durchzuführen. Somit ist im Haushaltsgerät selbst keine Steuerungseinrichtung mehr notwendig. Anpassungen der Prozesse bzw. neue Prozesse können einfach durch Aktualisierung der Serverstruktur erreicht werden.

Eine weitere günstige Möglichkeit sieht vor, dass das Haushaltsgerät Daten solcher Sensoren an der Serverstruktur übermittelt, und dass die Serverstruktur mindestens einen Prozessparameter mit Hilfe der Daten des entsprechenden Sensors und mit Hilfe des entsprechenden Aktuators steuert und/oder regelt. Dadurch, dass das Haushaltsgerät die Daten mindestens eines solchen Sensors an die Serverstruktur übermittet, kann die Serverstruktur diese Daten auswerten und somit die vorliegenden Prozessparameter bestimmen und auswerten. Durch Übertragung von Steuerbefehlen, können die entsprechenden Aktuatoren der gewünschte Prozessparameter geregelt werden kann.

Eine besonders vorteilhafte Lösung sieht vor, dass die Serverstruktur eine künstliche Intelligenz aufweist, mit welcher Anpassungen der Prozessparameter an Eigenheiten des Haushaltsgerätes und/oder an Prozessbedingungen durchgeführt werden. Dadurch können Alterungen der Haushaltsgeräte oder unterschiedliche Formen bzw. Ausbildungen der Haushaltsgeräte berücksichtigt werden. Dies ermöglicht insbesondere auch, dass mit Hilfe der Serverstruktur Haushaltsgeräte von unterschiedlichen Herstellern angesteuert werden können. Des Weiteren kann die künstliche Intelligenz dazu dienen, verschiedene Prozessbedingungen zu berücksichtigen. Solche Prozessbedingungen können sich von Fall zu Fall unterscheiden. Beim Beispiel eines Backofens, der ein Rezept für einen Schweinebraten durchführen soll, kann das Gewicht des Schweinebratens variieren, beispielsweise können sich auch Feuchtigkeits- bzw. Wasseranteil des Schweinebratens von Fall zu Fall unterscheiden. Die künstliche Intelligenz kann Aufgrund der Sensordaten Abweichungen vom Standard erkennen und eine entsprechende Anpassung der Prozessparameter durchführen, um dennoch ein optimales Ergebnis des Prozesses zu erhalten.

Eine besonders vorteilhafte Lösung sieht vor, dass die künstliche Intelligenz ein neuronales Netz aufweist. Dadurch kann die Auswertung der verschiedenen Prozessparameter beschleunigt und erleichtert werden, so dass die künstliche Intelligenz mit Hilfe der vorhandenen Prozessparameter auf verschiedene Prozessbedingungen reagieren kann.

Eine vorteilhafte Variante sieht vor, dass Daten zwischen dem Haushaltsgerät und der Serverstruktur über das Internet übertragen werden. Somit kann die Serverstruktur zentral außerhalb des Haushaltes angeordnet sein, wodurch sich die Betriebskosten der Serverstruktur nicht zulasten des Nutzers des Haushaltsgerätes anfallen.

Ferner basiert die Erfindung auf der Grundidee, ein Haushaltsgerät bereitzustellen, dass durch ein solches Verfahren steuerbar ist oder gesteuert wird. Dazu weist das Haushaltsgerät eine Datenübertragungseinrichtung auf, mit welcher Sensordaten gesendet und Steuerungsbefehle empfangen werden können. Dies ermöglicht die Kommunikation zwischen dem Haushaltsgerät und der Serverstruktur, so dass die Serverstruktur das Haushaltsgerät zur Ausführung bzw. bei der Ausführung von Prozessen steuern kann. Beispielsweise sendet die Serverstruktur Steuerungsbefehle, mit welcher Aktoren angesteuert werden. Solche Aktoren, die durch die Serverstruktur angesteuert werden können, sind beispielsweise Heizeinrichtungen, Mikrowellenquellen, Motoren, Lüfter, Dosiereinrichtungen, beispielsweise Ventile für Flüssigkeiten wie Wasser, Reinigungsmittel oder Waschmittel, oder Dosiereinrichtungen für pulverförmige Verbrauchsmaterialien.

Beispiele für durch Sensoren erfassbare Prozessparameter sind insbesondere Temperatur, Feuchtigkeit, insbesondere Luftfeuchtigkeit, Flüssigkeitsmenge, insbesondere Wassermenge, Gewicht, Verschmutzungsgrad, Schaumbildung, Füllstand von Verbrauchsmittelbehältern, Zustandsparameter, die erfassen, ob beispielsweise Satzbehälter oder Wasserbehälter richtig eingesetzt sind, chemische Zusammensetzung der Luft, Anwesenheit und Menge von Verbrennungsstoffen und pH-Wert.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

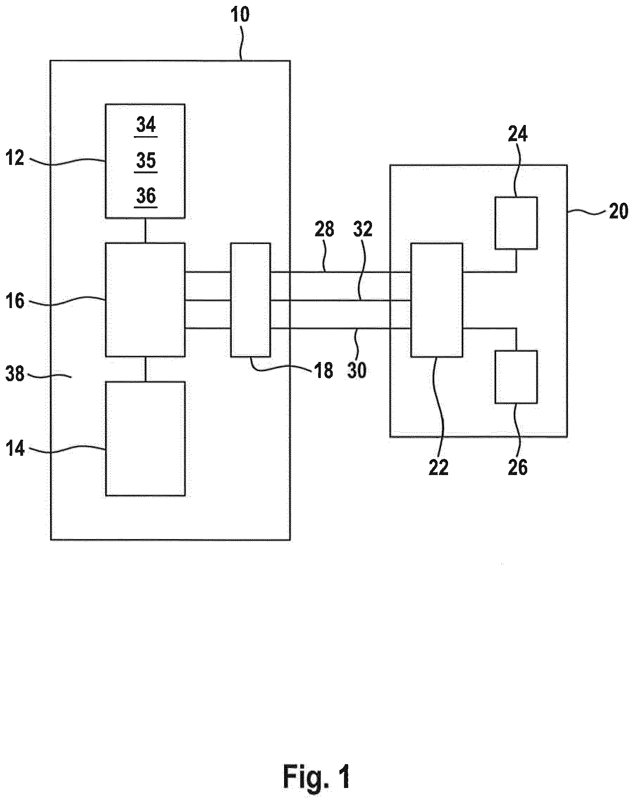

Die einzige Figur 1 zeigt schematisch eine Serverstruktur und ein Haushaltsgerät.

Eine Ausführungsform einer Serverstruktur 10 und eines Haushaltsgerätes 20 für ein Verfahren zur Steuerung des Haushaltsgerätes sind beispielhaft in der Figur 1 dargestellt. Die Serverstruktur 10 weist eine Speichereinheit 12, eine künstliche Intelligenzeinheit 14, eine Steuereinrichtung 16 und eine Kommunikationsschnittstelle 18 auf. Das zu steuernde Haushaltsgerät 20 weist ebenfalls eine Kommunikationsschnittstelle 22, mindestens einen Sensor 24 und mindestens einen Aktuator 26 auf. Die Kommunikationsschnittstelle 22 des Haushaltsgeräts 20 kann mit der Kommunikationsschnittstelle 18 der Servereinrichtung 10 kommunizieren. Beispielsweise kann dazu das Internet benutzt werden.

In der Speichereinheit 12 können für das Haushaltsgerät 20 Prozessabläufe 34 für auf dem Haushaltsgerät 20 ausführbare Prozesse 35 gespeichert werden.

Die beiden Kommunikationseinrichtungen 18 und 22 bauen beispielsweise einen Sensordatenkanal 28 für Sensordaten, einen Steuerungsdatenkanal 30 für Steuerungsbefehle und einen allgemeinen Datenkanal 32 für allgemeine Kommunikation zur Verfügung. Über den allgemeinen Datenkanal 32 können Informationen zwischen der Serverstruktur 10 und dem Haushaltsgerät 20 übertragen werden. Beispielsweise werden Informationen dazu übertragen, welche Prozesse 35 für das Haushaltsgerät 20 zur Verfügung stehen. In die andere Richtung kann das Haushaltsgerät 20 der Serverstruktur 10 mitteilen, welcher Prozess 35 durchgeführt werden soll und wann dieser Prozess 35 gestartet werden soll. Über den Sensordatenkanal 28 kann das Haushaltsgerät 20 Messdaten des mindestens einen Sensors 24 an diese Serverstruktur 10 übertragen. Über den Steuerungsdatenkanal 30 kann die Servereinrichtung 10 Steuerungsbefehle für den mindestens einen Aktor 26 des Haushaltsgerätes 20 an das Haushaltsgerät 20 übertragen.

Die Steuereinrichtung 16 der Serverstruktur 10 wertet die von dem Haushaltsgerät 20 übertragenen Daten aus und ermittelt geeignete Steuerbefehle für die Aktoren 26 des Haushaltsgeräts 20. Dazu wird der im Speicher 12 hinterlegter Prozessablauf 34 berücksichtigt. Der Prozessablauf 34 gibt zeitliche Abhängigkeit oder Verläufe von Prozessparametern 36 vor. Die künstliche Intelligenzeinheit 14 kann je nach vorhandenen Informationen über Prozessparameter 36 Veränderungen am Prozessablauf 34 vornehmen, um den Prozess 35 auf unterschiedliche Haushaltsgeräte oder unterschiedliche Prozessbedingungen anzupassen.

Ferner kann eine Schnittstelle 38 für Drittanbieter bereitgestellt werden, über welche der Drittanbieter Prozesse 35 für Haushaltsgeräte 20 anbieten kann. Dazu werden die entsprechenden Prozessabläufe 36 für die Drittanbieterprozesse ebenfalls in dem Speicher 12 der Serverstruktur 10 hinterlegt. Ein Besitzer eines Haushaltsgerätes 20 kann dann zwischen Prozessen 35 des eigentlichen Herstellers und zwischen Prozessen 35 von Drittanbietern auswählen und diese über das Haushaltsgerät 20 aktivieren.

Insbesondere kann auch ein Bezahlsystem vorgesehen sein, so dass die Nutzung einzelner Prozesse 35 nur gegen Zusatzzahlung möglich ist.

Der Vorteil der Aufteilung der zwischen Serverstruktur und Haushaltsgerät 20 ist, dass entwickelte Prozesse 35 nicht auf ein einzelnes Modell eines Haushaltsgerätes 20 beschränkt sind. Insbesondere können diese Prozesse 35 auch auf verschiedenen Geräten unterschiedlicher Hersteller durchgeführt werden. Darüber hinaus ist es auch möglich, dass Drittanbieter Prozesse 35 für Haushaltsgeräte 20 verschiedener Hersteller anbieten. Darüber hinaus wird auch die Erweiterung und Verbesserung einzelner Prozesse 35 erleichtert, da lediglich in der zentraler Serverstruktur 10 ein aktualisierter Prozessablauf 34 im Speicher 12 hinterlegt werden muss.

Ein beispielhafter Prozess 35 kann beispielsweise in einem Backofen durchgeführt werden, um einen Schweinebraten zu garen. Bei Rezepten für Backöfen ist es besonders vorteilhaft, wenn Drittanbieter Rezepte in Prozessform anbieten und verkaufen können, da somit die Nutzungsvielfalt des Haushaltsgeräts 20 erhöht wird.

Beispielsweise könnte auch ein Verbrauchsmittelhersteller, wie beispielsweise ein Hersteller für Spülmaschinenreinigungsmittel spezielle Prozesse 35 für Spülmaschinen bereitstellen, bei welchen das Reinigungsmittel optimal ausgenutzt wird. Entsprechendes könnte auch für Waschmittel bei Waschmaschinen erfolgen. Denkbar wäre auch, dass Textilienhersteller spezielle Prozesse 35 für Waschmaschinen bereitstellen, mit welchen diese schonend gereinigt werden können.

Denkbar ist auch, dass Drittanbieter, die Entkalker herstellen, als Prozess 35 spezielle Entkalkungsprogramme für verschiedene Haushaltsgeräte 20 anbieten, mit welchen ein optimales Entkalkungsergebnis erzielt werden kann.

### Bezugszeichenliste

- 10: Serverstruktur
- 12: Speichereinheit
- 14: Künstliche Intelligenzeinheit
- 16: Steuereinheit
- 18: Kommunikationseinheit
- 20: Haushaltsgerät
- 22: Kommunikationseinheit
- 24: Sensor
- 26: Aktuator
- 28: Sensordatenkanal
- 30: Steuerungsdatenkanal
- 32: allgemeiner Datenkanal
- 34: Prozessablauf
- 35: Prozess
- 36: Prozessparameter
- 38: Drittanbieterschnittstelle 38

## Patentansprüche

1. Verfahren zur Steuerung eines Haushaltsgeräts (20) bei der Ausführung eines Prozesses (35), wobei das Haushaltsgerät (35) mindestens einen Sensor (24) zur Erfassung von Prozessparametern (36) und mindestens einen Aktor (26) zum Verändern von Prozessparametern (36) aufweist, **dadurch gekennzeichnet, dass** eine Serverstruktur (10) bereitgestellt wird, in welcher mindestens ein Prozessablauf (34) eines solchen Prozesses (35) gespeichert ist, und dass die Serverstruktur (10) mindestens einen solchen Aktor (26) des Haushaltsgeräts (20) ansteuert, um einen solchen Prozessablauf (34) durchzuführen.

2. Verfahren nach Anspruch 1, **dadurch gekennzeichnet, dass** das Haushaltsgerät (10) Daten mindestens eines solchen Sensors (24) an eine Serverstruktur (10) übermittelt, und dass die Serverstruktur (10) mindestens einen Prozessparameter (36) mithilfe der Daten des entsprechenden Sensors (24) und mithilfe des entsprechenden Aktors (26) steuert und/oder regelt.

3. Verfahren nach Anspruch 1 oder 2, **dadurch gekennzeichnet, dass** die Serverstruktur (10) eine künstliche Intelligenz (14) aufweist, mit welcher Anpassungen der Prozessparameter (36) an Eigenheiten des Haushaltsgerätes (20) und/oder an Prozessbedingungen durchgeführt werden.

4. Verfahren nach einem der Ansprüche 1 bis 3, **dadurch gekennzeichnet, dass** Daten zwischen dem Haushaltsgerät (20) und der Serverstruktur (10) über das Internet übertragen werden.

5. Haushaltsgerät (20) das durch ein Verfahren nach einem der Ansprüche 1 bis 4 steuerbar ist oder gesteuert wird, **gekennzeichnet durch** eine Datenübertragungseinrichtung (22), mit welcher Sensordaten gesendet und Steuerungsbefehle empfangen werden können.
